# EUROPEAN PATENT SPECIFICATION

(11) **EP 4 465 495 B1**
(45) Date of publication and mention of the grant of the patent: **25.03.2026**
(21) Application number: 24175186.6
(22) Date of filing: 10.05.2024
(51) Int. Cl.: H02K 1/28, H02K 1/2783

(54) **ROTOR FOR A ROTARY ELECTRIC MACHINE**
ROTOR FÜR EINE ROTIERENDE ELEKTRISCHE MASCHINE
ROTOR POUR MACHINE ÉLECTRIQUE TOURNANTE

(30) Priority: 18.05.2023 IT 202300010020
(43) Date of publication of application: 20.11.2024
(73) Proprietor: FERRARI S.p.A., 41100 Modena (IT)
(72) Inventor: FERRARA, Davide, 41100 MODENA (IT); FAVERZANI, Paolo, 41100 MODENA (IT); POGGIO, Luca, 41100 MODENA (IT)
(74) Representative: Studio Torta S.p.A.

(56) References cited:
- EP-A1- 4 135 164
- DE-A1- 4 107 602
- US-A1- 2022 029 487

## Description

### TECHNICAL FIELD

The present invention relates to a rotor for a rotary electric machine.

The present invention is advantageously applied to a rotary electric machine for automotive powering, which is installed on board a vehicle and can be utilized as a motor (absorbing electric energy and generating a mechanical driving torque) or as a generator (converting mechanical energy into electric energy).

### PRIOR ART

A rotary electric machine for automotive powering comprises a shaft, which is mounted in a rotatable manner so as to rotate around a central rotation axis, a rotor which generally has permanent magnets and is fitted to the shaft so as to rotate together with said shaft, and a stator arranged around the rotor so as to enclose, on the inside, said rotor.

Patent applications EP4135164A1, DE4107602A1 and US2022029487A1 describe a rotor for a rotary electric machine and comprising: a support cylinder, which has an outer surface and a central cavity; a plurality of permanent magnets, which are axially oriented, rest on the outer surface of the support cylinder, and are arranged beside one another so as to form a closed ring; and two end discs, which are arranged at the axially opposite ends of the support cylinder and define lateral edges of an annular seat containing the main permanent magnets. A radially outer portion of each end disc extending beyond the outer surface of the support cylinder is arranged at a non-zero axial distance from the corresponding permanent magnets.

### DESCRIPTION OF THE INVENTION

The object of the present invention is to provide a rotor for a rotary electric machine which has a simplified assembly of the permanent magnets in the rotor without simultaneously compromising the protection of said permanent magnets with respect to atmospheric agents.

According to the present invention, a rotor for a rotary electric machine is provided as claimed in the appended claims.

The claims describe preferred embodiments of the present invention forming integral part of the present description.

### BRIEF DESCRIPTION OF THE DRAWINGS

The present invention will now be described with reference to the accompanying drawings, which illustrate a non-limiting example embodiment thereof:
- Figure 1 is a schematic, longitudinal section view of a rotary electric machine provided with a rotor manufactured in accordance with the present invention;
- Figure 2 is a perspective view of the rotor of Figure 1 with some parts removed for clarity;
- Figure 3 is a longitudinal section view of the rotor of Figure 1;
- Figure 4 is an enlarged view of a detail of Figure 3; and
- Figure 5 is a perspective exploded view of the rotor of Figure 1 with some parts removed for clarity.

### PREFERRED EMBODIMENTS OF THE INVENTION

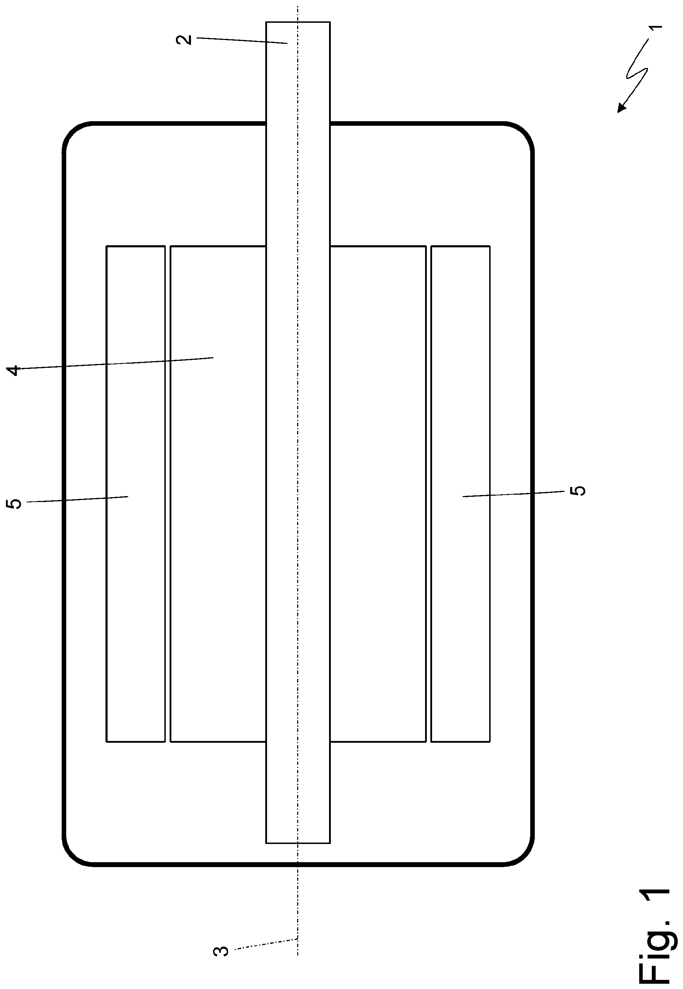

In Figure 1, reference numeral 1 indicates, as a whole, a synchronous electric machine for automotive powering of reversible type (i.e. which can operate both as an electric motor, absorbing electric energy and generating a mechanical driving torque, and as an electric generator, absorbing mechanical energy and generating electric energy).

The electric machine 1 is intended to be installed in an electric or hybrid drive vehicle comprising at least two drive wheels (namely, in an electric or hybrid drive vehicle with two drive wheels or with four drive wheels). In particular, the electric machine 1 can be connected to the drive wheels (directly or by means of a transmission possibly provided with a clutch); namely, between the electric machine 1 and the drive wheels there can be a direct connection, there can be a simple speed reducer, or there can also be a clutch.

The electric machine 1 comprises a shaft 2, which is mounted in a rotatable manner so as to rotate around a central rotation axis 3, a rotor 4 with permanent magnets which is fitted to the shaft 2 so as to rotate together with said shaft 2, and a stator 5 with a cylindrical tubular shape arranged around the rotor 4 so as to enclose, on the inside, said rotor 4.

Between the rotor 4 and the stator 5, an air gap with an annular shape is defined, which has a reduced thickness (normally the bare minimum needed in order to allow the rotation of the rotor 4 inside the stator 5 in total safety).

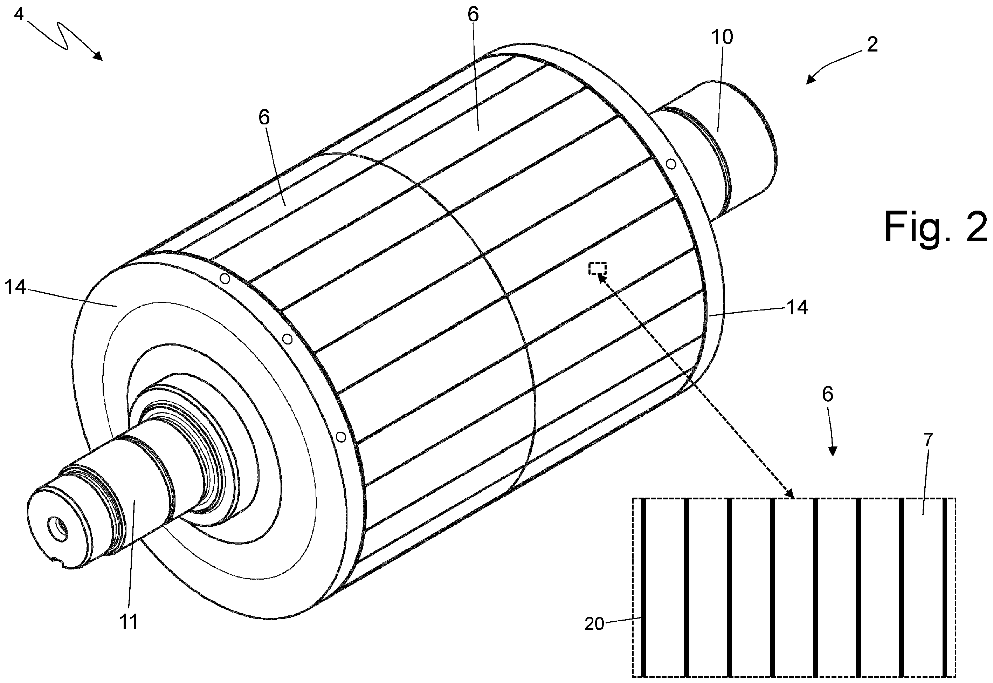

According to what is illustrated in Figures 2, 3 and 5, the rotor 4 comprises a plurality of permanent magnets 6, which are axially oriented and are arranged beside one another around the rotation axis 3 so as to form a closed ring. The permanent magnets 6 have a surface arrangement, namely are arranged at the outer surface of the rotor 4 and are not inserted in recesses obtained in the rotor 4.

The sequence of permanent magnets 6 which constitutes the closed ring entails a circumferential arrangement according to a Halbach array so as to nullify the magnetic field radially on the inside of the permanent magnets 6 and so as to maximize the magnetic field radially on the outside of the permanent magnets 6. In other words, the permanent magnets 6 are arranged so as to nullify the magnetic field radially on the inside of the permanent magnets 6 (towards the shaft 2) and so as to maximize the magnetic field radially on the outside of the permanent magnets 6 (towards the magnetic core of the stator 5). Namely, the permanent magnets 6 are circumferentially arranged one following the other according to a Halbach array so as to nullify the magnetic field radially on the inside of the permanent magnets 6 and so as to maximize the magnetic field radially on the outside of the permanent magnets 6.

A Halbach array is a particular joining (arrangement) of the permanent magnets 6, which are placed so as to strengthen the magnetic field along a face of the array (the radially outermost face in the present embodiment) and simultaneously cancel (nullify) by interference the magnetic field in the opposite face (the radially innermost face in the present embodiment). The Halbach array entails cyclically repeating sets of four permanent magnets 6: a permanent magnet 6 having a South-North orientation circumferentially arranged in a clockwise direction, a following permanent magnet 6 having a South-North orientation radially arranged towards the outside (namely, moving away from the central rotation axis 3), a following permanent magnet 6 having a South-North orientation circumferentially arranged in a counterclockwise direction, and a following permanent magnet 6 having a South-North orientation radially arranged towards the inside (namely, moving close to the central rotation axis 3).

According to a different embodiment, the permanent magnets 6 are not arranged according to a Halbach array.

According to a preferred embodiment illustrated in Figure 2, each permanent magnet 6 is not monolithic (namely, consisting from the beginning of one single piece of undivided and indivisible magnetic material), but is formed by an axial sequence of (smaller) permanent magnets 7 axially arranged in a single file one after the other, namely each permanent magnet 6 is formed by a plurality of (smaller) permanent magnets 7, which are axially arranged one after the other; in particular, in each permanent magnet 6, twenty to sixty permanent magnets 7 axially arranged in a single file one after the other are generally provided.

In each permanent magnet 6, all the permanent magnets 7 making up the permanent magnet 6 have the same identical orientation, namely are all equally oriented from the point of view of the magnetic field; in other words, in a same permanent magnet 6, the permanent magnets 7 making up the permanent magnet 6 have the magnetic field oriented in the same manner.

In the embodiment illustrated in the accompanying figures, the permanent magnets 6 alternatively have a cross section with a rectangular shape and a cross section with an isosceles trapezoidal shape; according to a different embodiment not illustrated, the permanent magnets 6 all have the same cross section with an isosceles trapezoidal shape (obviously with alternated orientations so as to make up the ring).

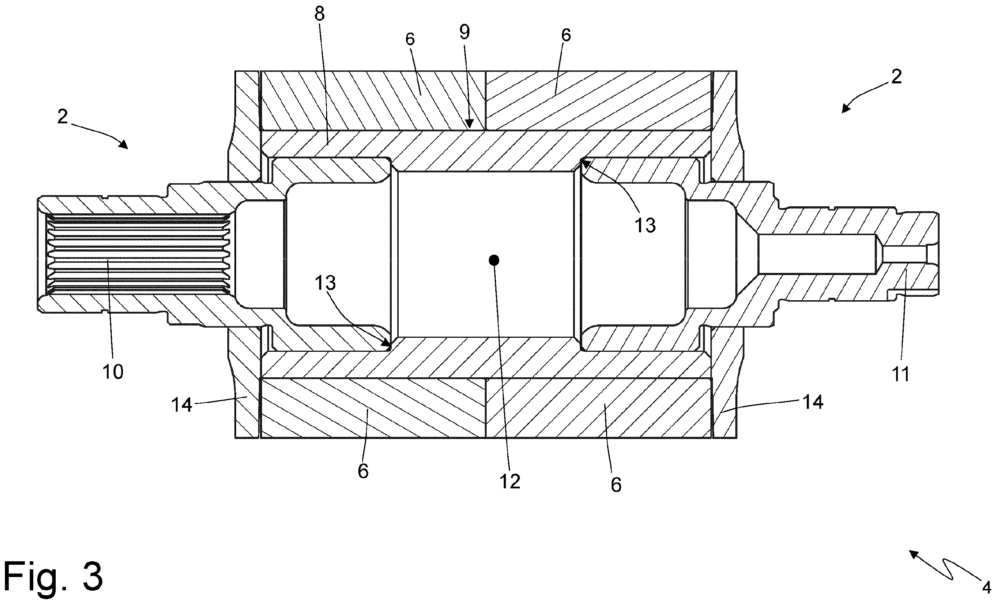

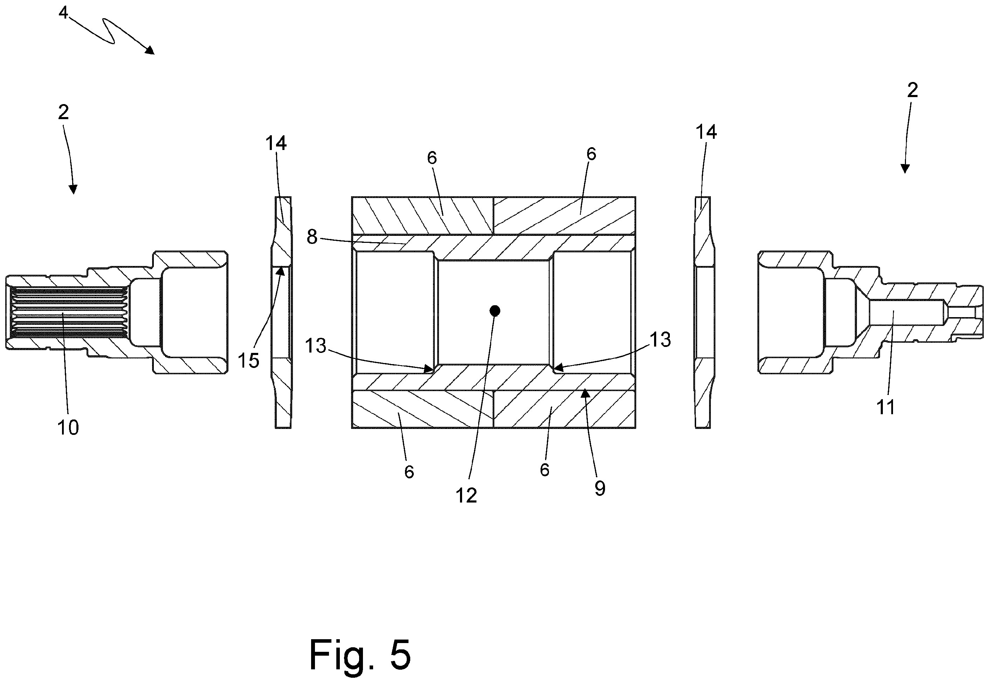

According to what is illustrated in Figures 3 and 5, the rotor 4 comprises a support cylinder 8, which houses the permanent magnets 6; in particular, the support cylinder 8 has an outer surface 9 on which the permanent magnets 6 rest. In other words, the permanent magnets 6 are arranged superficially on the outside of the support cylinder 8. According to a preferred embodiment, the outer surface 9 of the support cylinder 8 is facetted, namely is made up of a plurality of flat faces, each of which provides a flat support to a corresponding permanent magnet 6.

The support cylinder 8 is coupled to (namely constrained so as to be angularly integral with) the shaft 2 in order to form together one single cohesive block. According to a preferred embodiment, the shaft 2 consists of two half-shafts 10 and 11, each of which is separate and distant from the other and is individually coupled (fixed) to the support cylinder 8; namely, each half-shaft 10 or 11 is independent of and separate from the other half-shaft 11 or 10 and is coupled (fixed) to the support cylinder 8 independently of the other half-shaft 11 or 10 (the two half-shafts 10 and 11 do not touch each other as they are arranged at a certain distance from each other). In particular, the support cylinder 8 is internally hollow and has a central through cavity 12 into which the two half-shafts 10 and 11 are inserted. According to a preferred embodiment, each half-shaft 10 or 11 is driven through interference (in particular by means of a hot-cold coupling so as to obtain a high fastening force) into the support cylinder 8 (namely, into the central cavity 12 of the support cylinder 8).

According to a preferred embodiment, inside the central cavity 12 of the support cylinder 8 and at the two ends, two annular abutments 13 are obtained against which the corresponding half-shafts 10 and 11 rest; namely, the two annular abutments 13 constitute limit stops (of the seats) for the insertion of the half-shafts 10 and 11 into the central cavity 12 of the support cylinder 8.

The half-shaft 10 is shaped so as to be mounted on a support bearing; moreover, the half-shaft 10 is also shaped so as to be connected to a motion transmission system and thus has a spline machined surface. The half-shaft 11 is shaped so as to be mounted on another support bearing; moreover, the half-shaft 11 is also shaped so as to be connected to an angular position sensor (in particular, to a resolver) .

According to what is illustrated in Figures 2-5, the rotor 4 comprises a pair of end discs 14 (also called balancing discs), which are arranged around the shaft 2 at the two opposite ends of the support cylinder 8 and are designed (among other things) to contain the permanent magnets 6. In other words, the two end discs 14 constitute the two opposite ends of the rotor 4 and define the lateral edges of an annular seat which contains the permanent magnets 6.

According to a possible embodiment, the end discs 14 are designed to have balancing openings, which balance the rotor 4 around the rotation axis 3 and are manufactured by means of cylindrical drilling or by means of milling. In order to allow the rotor 4 to operate at high rotation speeds while ensuring, at the same time, a long operating life, it is necessary to minimize the vibrations which are generated during the operation and which must be absorbed by the bearings that support the shaft 2. For such purpose, it is often necessary to proceed with a fine balancing of the rotor 4 so as to reduce the unbalances (due to the unavoidable constructive tolerances) which generate vibrations during the rotation. In order to allow the balancing of the rotor 4, the two end discs 14 are utilized, which act as balancers thanks to calibrated asymmetries in their mass generated by the balancing openings (which can be dead openings or through openings and can be arranged in a radial or axial manner).

Obviously, the presence, the number, the arrangement and the depth of the balancing holes are absolutely random and can completely vary from rotor 4 to rotor 4, as they depend on the actual unbalance (due to the constructive tolerances) of the rotor 4 at the end of its manufacturing. Theoretically, it is also possible for a rotor 4 to have no balancing holes at all, as, for a fortunate combination of the constructive tolerances, at the end of its manufacturing it has such a reduced unbalance around the rotation axis 3 that no corrections are required.

Each end disc 14 centrally has a through hole 15 through which a corresponding half-shaft 10 or 11 is arranged (with contact), namely each end disc 14 is fitted around a corresponding half-shaft 10 or 11, which is arranged inside the through hole 15 of the end disc 14. In other words, each end disc 14 is fitted along a corresponding half-shaft 10 or 11 through its own through hole 15 so as to come into contact with the support cylinder 8. According to a preferred embodiment, each end disc 13 is driven onto said corresponding half-shaft 10 or 11 through interference (in particular, by means of a hot-cold coupling so as to obtain a high fastening force); namely, each end disc 13 centrally has a through hole 15 into which the corresponding half-shaft 10 or 11 is inserted (by means of an interference coupling).

Each end disc 14 has a larger diameter than a diameter of the support cylinder and extends beyond the outer surface 9 of the support cylinder 8 so as to define an axial containment of the permanent magnets 6; in other words, the two end discs 14 constitute outer edges of the support cylinder 8 which protrude from the outer surface 9 of the support cylinder 8 and delimit said outer surface 9 on both sides.

According to a preferred embodiment, the end discs 14 are in axial abutment against the support cylinder 8; namely, the end discs 14 axially *"touch"* the support cylinder 8 and not the permanent magnets 6 so as to axially press directly against the support cylinder 8, instead of pressing against the permanent magnets 6. For such reason, the support cylinder 8 is axially (slightly, actually a few millimetres) longer than the permanent magnets 6 so as to come into contact with the end discs 14 before the permanent magnets 6.

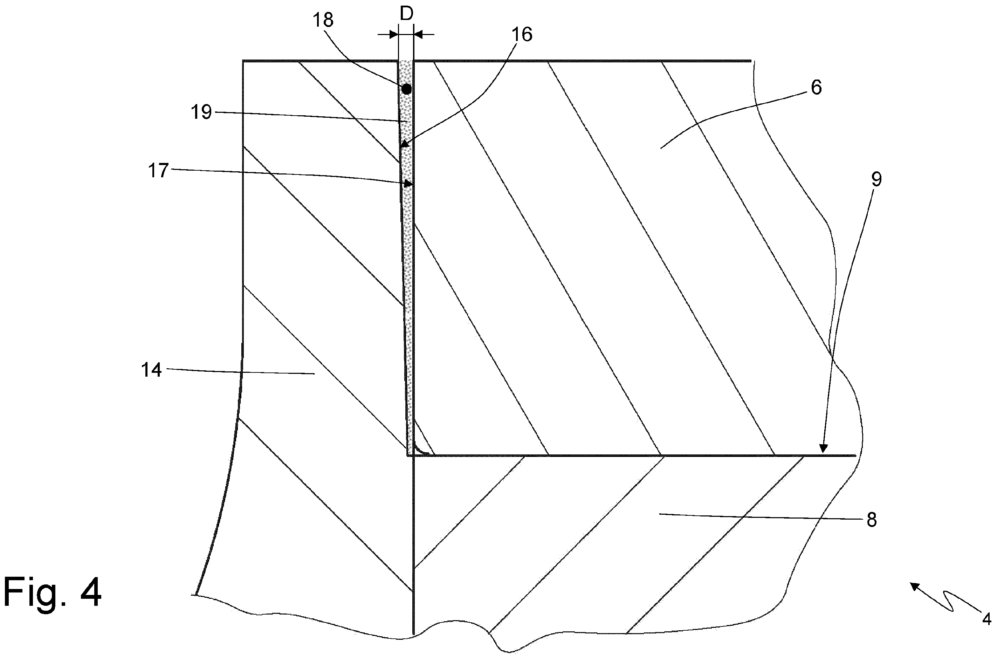

According to what is better illustrated in Figure 4, a radially outer portion of each end disc 14 extending beyond the outer surface 9 of the support cylinder 8 is arranged at a given non-zero axial distance D from the corresponding permanent magnets 6. Namely, an axially inner wall 16 of the radially outer portion of each end disc 14 is arranged at a given non-zero axial distance D from an axially outer wall 17 of the corresponding permanent magnets 6. This axial distance D between the axially inner wall 16 of the radially outer portion of each end disc 14 and the axially outer wall 17 of the corresponding permanent magnets 6 creates a space 18 that can initially be empty (when the permanent magnets 6 are radially inserted into the support cylinder 8) and is filled with a filler 19 (initially fluid and which solidifies in contact with the atmosphere), which is generally a glue or a resin. In other words, initially the permanent magnets 6 are radially inserted into the space centrally delimited by the outer surface 9 of the support cylinder 8 and laterally delimited by the axially inner walls 16 of the two end discs 14; subsequently (i.e. after inserting all the permanent magnets 6) the space 18 that initially remains empty is filled (and thus totally closed) with the filler 19.

According to what is illustrated in Figure 4, the axial distance D is not constant but progressively decreases (linearly) from the outside to the inside (i.e. progressively decreases towards the rotation axis 3) and thus gives the space 18 a (truncated) "V" shape.

The rotor 4 comprises a cylindrical and internally hollow containment element (not illustrated), which is arranged around the permanent magnets 6 so as to keep the permanent magnets 6 in contact with the support cylinder 8; namely, the containment element covers the permanent magnets 6 externally so as to provide a radial containment of said permanent magnets 6 in order to prevent the centrifugal force from being able to push the permanent magnets 6 against the magnetic core of the stator 5.

Generally, the half-shaft 10 is made of high-strength steel (or another equivalent material in terms of mechanical features) since it must be able to transmit the torque generated or absorbed by the rotor 4; on the other hand, the half-shaft 11 is made of steel or another metal material having a lower strength than the steel of the half-shaft 10, since the half-shaft 11 does not transmit the torque generated or absorbed by the rotor 4.

The support cylinder 8 is made of a ferromagnetic metal material (steel), of a non-magnetic metal material (such as stainless steel, aluminium, titanium or magnesium), or even of a non-metal material (typically, a composite material, such as carbon fibre, in order to have the necessary strength). As mentioned in the foregoing, the magnetic field inside the permanent magnets 6 is zero by effect of the Halbach arrangement of the permanent magnets 6 and thus the support cylinder 8 is not affected by a significant magnetic field; consequently, the support cylinder 8 does not necessarily have to have ferromagnetic properties. The support cylinder 8 made of a ferromagnetic metal material simplifies the assembly of the rotor 4, since the permanent magnets 6 adhere, by magnetic attraction, to the outer surface 9 of the support cylinder 8 and it is thus easier to arrange them on the outer surface 9 of the support cylinder 8 during the assembly.

The end discs 14 are normally made of non-magnetic stainless steel so as to have the necessary strength, so as to allow the correct balancing of the rotor 4 (the end discs 14 must have a certain mass in order to be able to produce an effective balancing action by effect of the removal of material from said end discs 14) and, at the same time, so as not to disturb the magnetic field generated by the permanent magnets 6.

According to a possible embodiment illustrated in Figure 2, in each permanent magnet 6, the single permanent magnets 7 are glued to one another by means of the interposition of an assembly glue 20 (which constitutes an electrical insulator) so as to reduce energy losses due to eddy currents. In other words, each permanent magnet 6 is manufactured by gluing the single permanent magnets 7 to one another by means of the assembly glue 20 (which constitutes an electrical insulator).

According to a preferred embodiment, the permanent magnets 6 are directly mounted on the outer surface 9 of the support cylinder 8; in particular, each permanent magnet 6 is glued to the outer wall 9 of the support cylinder 8 by means of an assembly glue, which is preferably an electrical insulator (so as to avoid *"short-circuiting"* the various permanent magnets 7 of a same permanent magnet 6 through the outer wall 9 of the support cylinder 8). In other words, an electrically insulating layer consisting of the assembly glue is interposed between the outer wall 9 of the support cylinder 8 and the permanent magnets 6.

The assembly glue has the function of electrically insulating the permanent magnets 6 from the underlying outer wall 9 of the support cylinder 8 and above all of connecting the permanent magnets 6 to the outer wall 9 of the support cylinder 8 during the construction of the rotor 4 (the mechanical restraint of the permanent magnets 6 is produced by the containment element, since the assembly glue is not capable of withstanding the centrifugal force when the rotor 4 rotates at high speed).

The embodiments described herein can be combined with one another without departing from the scope of protection of the present invention.

The rotor 4 described above has numerous advantages.

Firstly, the rotor 4 described above allows mounting the permanent magnets 6 on the support cylinder 8 in a very simple manner since it allows inserting the permanent magnets 6 with a radial movement and without any effort thanks to the existing axial distance D between the end discs 14 and the permanent magnets 6. In other words, the permanent magnets 6 being rested with a radial movement against the outer surface 9 of the support cylinder 8 do not *"rub"* against the end discs 14 thanks to the axial distance D and therefore their radial insertion does not involve any effort.

The fact that during the coupling of the permanent magnets 8 to the outer surface 9 of the support cylinder 8, said permanent magnets 8 do not rub against the end discs 14 allows preventing the assembly glue 20 located on the axially outer wall 17 of the permanent magnets 8 from being removed (scraped off) by the end discs 14 and therefore allows it to remain in position; in fact, it is important that the assembly glue 20 located on the axially outer wall 17 of the permanent magnets 8 is not removed since it protects the permanent magnets 8 from the oxidation caused by the contact with the oxygen present in the atmosphere.

In order to further protect the permanent magnets 8 from oxidation and give the assembly a greater compactness, the spaces 18 are filled with the filler 19, which can be the same assembly glue 20 or can be a resin or a glue of a different type.

The flared (i.e. "V") shape of the spaces 18 performs a self-centring function, which facilitates the correct axial positioning of the permanent magnets 8 when they rest on the outer surface 9 of the support cylinder 8.

Finally, the rotor 4 described above is easy to manufacture since it is composed of a reduced number of simply shaped pieces that can be quickly combined with one another also in automated processes.

### LIST OF THE REFERENCE NUMBERS OF THE FIGURES

- 1: electric machine
- 2: shaft
- 3: rotation axis
- 4: rotor
- 5: stator
- 6: permanent magnets
- 7: permanent magnets
- 8: support cylinder
- 9: outer surface
- 10: half-shaft
- 11: half-shaft
- 12: central cavity
- 13: annular abutments
- 14: end disc
- 15: through hole
- 16: axially inner wall
- 17: axially outer wall
- 18: space
- 19: filler
- 20: assembly glue
- D: axial distance

## Claims

1. A rotor (4) for a rotary electric machine (1) and comprising:
a support cylinder (8), which has an outer surface (9) and a central cavity (12);
a plurality of main permanent magnets (6), which are axially oriented, rest on the outer surface (9) of the support cylinder (8) and are arranged beside one another around a rotation axis (3) to form a closed ring; and
two end discs (14), which are arranged at the axially opposite ends of the support cylinder (8) and define lateral edges of an annular seat containing the main permanent magnets (6);
wherein a radially outer portion of each end disc (14) extending beyond the outer surface (9) of the support cylinder (8) is arranged at a non-zero axial distance from the corresponding main permanent magnets (6);
the rotor (4) is **characterized in that** the axial distance (D) is not constant and progressively decreases from the outside to the inside.

2. The rotor (4) according to claim 1, wherein an axially inner wall (16) of the radially outer portion of each end disc (14) is arranged at the non-zero axial distance (D) from an axially outer wall (17) of the corresponding permanent magnets (6).

3. The rotor (4) according to claim 1 or 2, wherein a space (18) that has a truncated "V" shape is defined between the radially outer portion of each end disc (14) and the corresponding permanent magnets (6).

4. The rotor (4) according to claim 3, wherein the space (18) is occupied by a filler (19), in particular a glue or a resin.

5. The rotor (4) according to one of the claims from 1 to 4, wherein the axial distance (D) decreases linearly from the outside to the inside.

6. The rotor (4) according to one of the claims from 1 to 5, wherein the end discs (14) have respective balancing openings, which balance the rotor (4) around the rotation axis (3).

7. The rotor (4) according to one of the claims from 1 to 6 and comprising two half-shafts (10, 11), which are independent of and separate from each other and are singularly inserted into opposite ends of the central cavity (12) of the support cylinder (8) so as to form one single block with the support cylinder (8).

8. The rotor (4) according to claim 7, wherein each half-shaft (10, 11) is driven into the central cavity (12) of the support cylinder (8) through interference.

9. The rotor (4) according to claim 8, wherein the central cavity (12) of the support cylinder (8) has two annular abutments (13), against which the corresponding half-shafts (10, 11) rest.

10. The rotor (4) according to claim 7, 8 or 9, wherein each end disc (14) is fitted around a corresponding half-shaft (10, 11) and is driven onto the half-shaft (10, 11) through interference.

11. The rotor (4) according to one of the claims from 1 to 10, wherein each main permanent magnet (6) consists of a plurality of smaller secondary permanent magnets (7), which are axially arranged one following the other.

12. The rotor (4) according to one of the claims from 1 to 11, wherein the main permanent magnets (6) are circumferentially arranged one following the other according to a Halbach array so as to nullify the magnetic field radially on the inside of the main permanent magnets (6) and so as to maximize the magnetic field radially on the outside of the main permanent magnets (6).

13. The rotor (4) according to claim 12, wherein the Halbach array entails cyclically repeating sets of four main permanent magnets (6): a main permanent magnet (6) having a South-North orientation circumferentially arranged in a clockwise direction, a following main permanent magnet (6) having a South-North orientation radially arranged towards the outside, a following main permanent magnet (6) having a South-North orientation circumferentially arranged in a counterclockwise direction, and a following main permanent magnet (6) having a South-North orientation radially arranged towards the inside.

## Patentansprüche

1. Rotor (4) für eine rotierende elektrische Maschine (1) und umfassend:
einen Stützzylinder (8), der eine Außenfläche (9) und einen zentralen Hohlraum (12) aufweist;
eine Vielzahl von Hauptpermanentmagneten (6), die axial ausgerichtet sind, auf der Außenfläche (9) des Stützzylinders (8) aufliegen und nebeneinander um eine Drehachse (3) angeordnet sind, um einen geschlossenen Ring zu bilden; und
zwei Endscheiben (14), die an den axial gegenüberliegenden Enden des Stützzylinders (8) angeordnet sind und Seitenkanten eines ringförmigen Sitzes definieren, der die Hauptpermanentmagnete (6) enthält;
wobei ein radial äußerer Abschnitt jeder Endscheibe (14), der sich über die Außenfläche (9) des Stützzylinders (8) hinaus erstreckt, in einem axialen Abstand ungleich Null von den entsprechenden Hauptpermanentmagneten (6) angeordnet ist;
der Rotor (4) **dadurch gekennzeichnet ist, dass** der axiale Abstand (D) nicht konstant ist und von außen nach innen progressiv abnimmt.

2. Rotor (4) nach Anspruch 1, wobei eine axial innere Wand (16) des radial äußeren Abschnitts jeder Endscheibe (14) in dem axialen Abstand (D) ungleich Null von einer axial äußeren Wand (17) der entsprechenden Permanentmagnete (6) angeordnet ist.

3. Rotor (4) nach Anspruch 1 oder 2, wobei ein Raum (18), der eine abgestumpfte "V"-Form aufweist, zwischen dem radial äußeren Abschnitt jeder Endscheibe (14) und den entsprechenden Permanentmagneten (6) definiert ist.

4. Rotor (4) nach Anspruch 3, wobei der Raum (18) von einem Füllstoff (19), insbesondere einem Leim oder einem Harz, eingenommen wird.

5. Rotor (4) nach einem der Ansprüche 1 bis 4, wobei der axiale Abstand (D) von außen nach innen linear abnimmt.

6. Rotor (4) nach einem der Ansprüche 1 bis 5, wobei die Endscheiben (14) jeweilige Auswuchtöffnungen aufweisen, die den Rotor (4) um die Drehachse (3) auswuchten.

7. Rotor (4) nach einem der Ansprüche 1 bis 6 und umfassend zwei Halbwellen (10, 11), die voneinander unabhängig und getrennt sind und einzeln in gegenüberliegende Enden des zentralen Hohlraums (12) des Stützzylinders (8) eingesetzt sind, um einen einzigen Block mit dem Stützzylinder (8) zu bilden.

8. Rotor (4) nach Anspruch 7, wobei jede Halbwelle (10, 11) durch Interferenz in den zentralen Hohlraum (12) des Stützzylinders (8) getrieben wird.

9. Rotor (4) nach Anspruch 8, wobei der zentrale Hohlraum (12) des Stützzylinders (8) zwei ringförmige Widerlager (13) aufweist, an denen die entsprechenden Halbwellen (10, 11) anliegen.

10. Rotor (4) nach Anspruch 7, 8 oder 9, wobei jede Endscheibe (14) um eine entsprechende Halbwelle (10, 11) herum angebracht ist und durch Interferenz auf die Halbwelle (10, 11) getrieben wird.

11. Rotor (4) nach einem der Ansprüche 1 bis 10, **dadurch gekennzeichnet, dass** jeder Hauptpermanentmagnet (6) aus einer Vielzahl von kleineren Sekundärpermanentmagneten (7) besteht, die axial hintereinander angeordnet sind.

12. Rotor (4) nach einem der Ansprüche 1 bis 11, wobei die Hauptpermanentmagnete (6) in Umfangsrichtung nacheinander gemäß einer Halbach-Anordnung angeordnet sind, um das Magnetfeld radial an der Innenseite der Hauptpermanentmagnete (6) aufzuheben und um das Magnetfeld radial an der Außenseite der Hauptpermanentmagnete (6) zu maximieren.

13. Rotor (4) nach Anspruch 12, wobei die Halbach-Anordnung die zyklische Wiederholung von Sätzen von vier Hauptpermanentmagneten (6) beinhaltet: einen Hauptpermanentmagneten (6) mit einer Süd-Nord-Ausrichtung, der in Umfangsrichtung im Uhrzeigersinn angeordnet ist, einen nachfolgenden Hauptpermanentmagneten (6) mit einer Süd-Nord-Ausrichtung, der radial nach außen angeordnet ist, einen nachfolgenden Hauptpermanentmagneten (6) mit einer Süd-Nord-Ausrichtung, der in Umfangsrichtung gegen den Uhrzeigersinn angeordnet ist, und einen nachfolgenden Hauptpermanentmagneten (6) mit einer Süd-Nord-Ausrichtung, der radial nach innen angeordnet ist.

## Revendications

1. Rotor (4) pour une machine électrique rotative (1) et comprenant :
un cylindre de support (8), qui possède une surface externe (9) et une cavité centrale (12) ;
une pluralité d'aimants permanents principaux (6), qui sont orientés axialement, reposent sur la surface externe (9) du cylindre de support (8) et sont agencés les uns à côté des autres autour d'un axe de rotation (3) pour former un anneau fermé ; et
deux disques d'extrémité (14), qui sont agencés aux extrémités axialement opposées du cylindre de support (8) et définissent des bords latéraux d'un siège annulaire contenant les aimants permanents principaux (6) ;
dans lequel une partie radialement externe de chaque disque d'extrémité (14) s'étendant au-delà de la surface externe (9) du cylindre de support (8) est agencée à une distance axiale non nulle des aimants permanents principaux (6) correspondants ;
le rotor (4) est **caractérisé en ce que** la distance axiale (D) n'est pas constante et diminue progressivement de l'extérieur vers l'intérieur.

2. Rotor (4) selon la revendication 1, dans lequel une paroi axialement interne (16) de la partie radialement externe de chaque disque d'extrémité (14) est agencée à la distance axiale non nulle (D) par rapport à une paroi axialement externe (17) des aimants permanents (6) correspondants.

3. Rotor (4) selon la revendication 1 ou 2, dans lequel un espace (18) qui possède une forme de « V » tronqué est défini entre la partie radialement externe de chaque disque d'extrémité (14) et les aimants permanents (6) correspondants.

4. Rotor (4) selon la revendication 3, dans lequel l'espace (18) est occupé par une charge de remplissage (19), en particulier une colle ou une résine.

5. Rotor (4) selon l'une des revendications 1 à 4, dans lequel la distance axiale (D) diminue linéairement de l'extérieur vers l'intérieur.

6. Rotor (4) selon l'une des revendications 1 à 5, dans lequel les disques d'extrémité (14) possèdent des ouvertures d'équilibrage respectives, qui équilibrent le rotor (4) autour de l'axe de rotation (3).

7. Rotor (4) selon l'une des revendications 1 à 6 et comprenant deux demi-arbres (10, 11), qui sont indépendants et séparés l'un de l'autre et sont insérés individuellement dans des extrémités opposées de la cavité centrale (12) du cylindre de support (8) de façon à former un unique bloc avec le cylindre de support (8).

8. Rotor (4) selon la revendication 7, dans lequel chaque demi-arbre (10, 11) est entraîné dans la cavité centrale (12) du cylindre de support (8) par interférence.

9. Rotor (4) selon la revendication 8, dans lequel la cavité centrale (12) du cylindre de support (8) possède deux butées annulaires (13), contre lesquelles les demi-arbres (10, 11) correspondants reposent.

10. Rotor (4) selon la revendication 7, 8 ou 9, dans lequel chaque disque d'extrémité (14) est emboîté autour d'un demi-arbre (10, 11) correspondant et est entraîné sur le demi-arbre (10, 11) par interférence.

11. Rotor (4) selon l'une des revendications 1 à 10, dans lequel chaque aimant permanent principal (6) consiste en une pluralité d'aimants permanents secondaires (7) plus petits, qui sont agencés axialement les uns à la suite des autres.

12. Rotor (4) selon l'une des revendications 1 à 11, dans lequel les aimants permanents principaux (6) sont agencés de manière circonférentielle les uns à la suite des autres selon un réseau de Halbach de façon à annuler le champ magnétique radialement sur l'intérieur des aimants permanents principaux (6) et de façon à maximiser le champ magnétique radialement sur l'extérieur des aimants permanents principaux (6) .

13. Rotor (4) selon la revendication 12, dans lequel le réseau de Halbach implique des ensembles se répétant cycliquement de quatre aimants permanents principaux (6) : un aimant permanent principal (6) ayant une orientation sud-nord agencée de manière circonférentielle dans une direction horaire, un aimant permanent principal (6) suivant ayant une orientation sud-nord agencée radialement vers l'extérieur, un aimant permanent principal (6) suivant ayant une orientation sud-nord agencée de manière circonférentielle dans une direction antihoraire, et un aimant permanent principal (6) suivant ayant une orientation sud-nord agencée radialement vers l'intérieur.
